(19) Europäisches Patentamt
European Patent Office
Office européen des brevets

(11) **EP 4 431 363 A1**

(12) **EUROPÄISCHE PATENTANMELDUNG**

(43) Veröffentlichungstag:
**18.09.2024 Patentblatt 2024/38**

(21) Anmeldenummer: 23161794.5

(22) Anmeldetag: **14.03.2023**

(51) Internationale Patentklassifikation (IPC):
**B61L 5/06** (2006.01)   **B61L 27/53** (2022.01)
**G06N 3/02** (2006.01)

(52) Gemeinsame Patentklassifikation (CPC):
**B61L 27/53; B61L 5/06; G06N 3/08; G06N 3/0455**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Siemens Mobility GmbH**
**81739 München (DE)**

(72) Erfinder:
• **Hambsch, Hardy**
**12439 Berlin (DE)**
• **Jiang, Nanzhu**
**12487 Berlin (DE)**
• **Kluckner, Stefan**
**12487 Berlin (DE)**
• **Mirtschin, Karsten**
**15711 Zeesen (DE)**
• **Müller, Julia**
**10245 Berlin (DE)**
• **Vidal Migallon, Irina**
**10999 Berlin (DE)**
• **Werner, Friederike**
**12099 Berlin (DE)**

(74) Vertreter: **Siemens Patent Attorneys**
**Postfach 22 16 34**
**80506 München (DE)**

(54) **VERFAHREN ZUM ERZEUGEN EINES WARTUNGSSIGNALS FÜR DIE WARTUNG EINER EISENBAHNWEICHE UND ÜBERWACHUNGSEINRICHTUNG ZUR DURCHFÜHRUNG EINES SOLCHEN VERFAHRENS**

(57)    Die Erfindung bezieht sich unter anderem auf ein Verfahren zum Erzeugen eines Wartungssignals (WS), das eine Wartungsempfehlung zur Wartung einer Eisenbahnweiche (10) beschreibt.

Erfindungsgemäß ist vorgesehen, dass mit für zumindest einen Beobachtungszeitraum (ZR), in dem zumindest ein Weichenumlauf (WUL) der Eisenbahnweiche (10) stattgefunden hat, erfassten Eingangsmesswerten (I1-In, M1-Mm; EM) ein Eingangsvektor (Ve) gebildet wird, der Eingangsvektor (Ve) in eine Komprimier-/Dekomprimiereinrichtung (22) eingespeist wird, die Komprimier-/Dekomprimiereinrichtung (22) an ihrem Ausgang für den Eingangsvektor (Ve) einen Ausgangsvektor (Va) ausgibt, wobei die Komprimier-/Dekomprimiereinrichtung (22) im Rahmen eines Trainingsverfahrens anhand von Trainingseingangsvektoren (Vet), die für eine oder mehrere Eisenbahnweichen ohne Wartungsbedarf erstellt worden sind, derart trainiert worden ist, dass die Abweichung zwischen den Trainingseingangsvektoren (Vet) und mit diesen durch die Komprimier-/Dekomprimiereinrichtung (22) gebildeten Trainingsausgangsvektoren (Vat) minimal ist oder eine vorgegebene Abweichungsgrenze unterschreitet, für den Ausgangsvektor (Va) die Abweichung zwischen dem Ausgangsvektor (Va) und dem ihm zugehörigen Eingangsvektor (Ve) unter Bildung eines Abweichungswerts (A) ermittelt wird, und anhand des Abweichungswerts (A) das Wartungssignal (WS) erzeugt wird.

FIG 2

**Beschreibung**

Die Erfindung bezieht sich auf ein Verfahren zum Erzeugen eines Wartungssignals, das eine Wartungsempfehlung zur Wartung einer Eisenbahnweiche beschreibt.

Komplexe mechanische Eisenbahnweichen verursachen große Aufwände bzgl. der Wartung. Insbesondere die regelmäßige und ausreichende Schmierung der beweglichen Komponenten, z. B. Gleitstuhl, ist notwendig, um die Funktion unter verschiedenen wechselnden Umgebungsvariablen, etwa Wetter und Lage der Eisenbahnweiche, zu gewährleisten. Bei reaktiver (korrektiver) Wartung entstehen hohe Kosten durch den Totalausfall der Infrastruktur. Regelmäßige präventive Wartung bewahrt zwar in der Regel vor Totalausfällen, verursacht aber personelle und finanzielle Aufwände und bindet Ressourcen.

Ziel ist es daher, die regelmäßige präventive Wartung, besonders die Schmierung, auf nur notwendige vorhergesagte Wartungseingriffe zu reduzieren.

Aktuell werden durchweg reaktive und vorbeugende Wartungen an den Eisenbahnweichen durchgeführt. Monitoring Systeme helfen, die Eisenbahnweiche aus der Ferne zu beobachten und ggf. bei Verschlechterung des Zustandes (Zunahme der Leistung oder/und Umlaufzeit) schmieren zu lassen. Der Effekt der Schmierung wird dabei vor allem durch die Umstellhäufigkeit und Wetterbedingungen beeinflusst: Regen kann die Eisenbahnweiche auswaschen; ebenso kann Schneefall die Schmiereffekte beeinträchtigen, sodass zeitnah wieder gewartet werden muss.

Der Erfindung liegt die Aufgabe zugrunde, ein einfaches automatisiertes Verfahren zum Erzeugen eines Wartungssignals anzugeben, das eine Wartungsempfehlung zur Wartung einer Eisenbahnweiche beschreibt.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass mit für zumindest einen Beobachtungszeitraum, in dem zumindest ein Weichenumlauf der Eisenbahnweiche stattgefunden hat, erfassten Eingangsmesswerten ein Eingangsvektor gebildet wird, der Eingangsvektor in eine Komprimier-/Dekomprimiereinrichtung eingespeist wird, die Komprimier-/Dekomprimiereinrichtung an ihrem Ausgang für den Eingangsvektor einen Ausgangsvektor ausgibt, wobei die Komprimier-/Dekomprimiereinrichtung im Rahmen eines Trainingsverfahrens anhand von Trainingseingangsvektoren, die für eine oder mehrere Eisenbahnweichen ohne Wartungsbedarf erstellt worden sind, derart trainiert worden ist, dass die Abweichung zwischen den Trainingseingangsvektoren und mit diesen durch die Komprimier-/Dekomprimiereinrichtung gebildeten Trainingsausgangsvektoren minimal ist oder eine vorgegebene Abweichungsgrenze unterschreitet, für den Ausgangsvektor die Abweichung zwischen dem Ausgangsvektor und dem ihm zugehörigen Eingangsvektor unter Bildung eines Abweichungswerts ermittelt wird, und anhand des Abweichungswerts das Wartungssignal erzeugt wird.

Ein wesentlicher Vorteil des erfindungsgemäßen Verfahrens besteht darin, dass sich mit der erfindungsgemäß trainierten Komprimier-/Dekomprimiereinrichtung in besonders einfacher Weise eine Vielzahl an Eingangsmesswerten gleichzeitig hinsichtlich eines etwaigen Wartungsbedarfs der Eisenbahnweiche auswerten lässt und eine Vielzahl an Einflussfaktoren gleichzeitig beobachten lässt.

Die Komprimier-/Dekomprimiereinrichtung ist im Rahmen des Trainingsverfahrens vorzugsweise ausschließlich anhand von Trainingseingangsvektoren trainiert worden, die sich auf die bezüglich der Wartung später tatsächlich zu überwachende Eisenbahnweiche beziehen.

Vorteilhaft ist es, wenn für zumindest zwei Beobachtungszeiträume der Eisenbahnweiche jeweils Eingangsmesswerte erfasst werden und mit den Eingangsmesswerten für jeden der Beobachtungszeiträume jeweils ein Eingangsvektor für die Komprimier-/Dekomprimiereinrichtung gebildet wird, jeder der Eingangsvektoren in die Komprimier-/Dekomprimiereinrichtung eingespeist wird, die Komprimier-/Dekomprimiereinrichtung an ihrem Ausgang für jeden der Eingangsvektoren jeweils einen Ausgangsvektor ausgibt, für jeden der zumindest zwei Ausgangsvektoren jeweils die Abweichung zwischen dem Ausgangsvektor und dem ihm zugehörigen Eingangsvektor unter Bildung eines Abweichungswerts ermittelt wird, und anhand der zumindest zwei Abweichungswerte das Wartungssignal erzeugt wird.

Der zeitliche Verlauf der zumindest zwei Abweichungswerte wird vorzugsweise einem Prognoseschritt unterzogen, mit dem prognostiziert wird, zu welchem Zeitpunkt die Abweichungswerte zukünftiger Beobachtungszeiträume einen vorgegebenen Grenzwert erreichen oder überschreiten werden.

Das Wartungssignal gibt vorzugsweise den prognostizierten Zeitpunkt oder einen mit diesem gebildeten Ersatzzeitpunkt (z. B. Wunschwartungszeitpunkt) oder Ersatzzeitraum (z. B. Wunschwartungszeitraum) an.

Anhand des zeitlichen Verlaufs der Abweichungswerte in der Vergangenheit wird vorzugsweise ein aufgrund des mit der Zeit ansteigenden Wartungsbedarfs auftretender Abweichungsanstieg für die Zukunft geschätzt; anhand des Abweichungsanstiegs wird vorzugsweise ermittelt, zu welchem Zeitpunkt die Abweichungswerte zukünftiger Beobachtungszeiträume den vorgegebenen Grenzwert erreichen oder überschreiten werden.

Bei einer bevorzugten Ausgestaltung ist vorgesehen, dass der oder die Beobachtungszeiträume jeweils Messwerte bezüglich eines einzigen Weichenumlaufs umfassen.

Bei einer anderen bevorzugten Ausgestaltung ist vorgesehen, dass der oder die Beobachtungszeiträume jeweils Messwerte bezüglich zweier oder mehr Weichenumläufe umfassen.

Im letztgenannten Fall umfassen der oder die Beobachtungszeiträume vorzugsweise jeweils Messwerte bezüglich zweier oder mehr zeitlich unmittelbar hintereinander liegender Weichenumläufe.

Die Beobachtungszeiträume sind vorzugsweise durch eine vorgegebene Anzahl an Umschaltvorgängen definiert, die für alle Beobachtungszeiträume identisch ist.

Die Beobachtungszeiträume können zeitlich nacheinander liegen oder sich zeitlich überlappen.

Als besonders vorteilhaft wird es angesehen, wenn die Komprimier-/Dekomprimiereinrichtung eine Eingabeschicht zur Eingabe der Eingangsvektoren und zur Bildung von Zwischenvektoren aufweist, die Komprimier-/Dekomprimiereinrichtung eine Ausgabeschicht zur Eingabe der Zwischenvektoren und zur Bildung der Ausgangsvektoren aufweist und die Vektorkomponentenanzahl der Zwischenvektoren maximal halb so groß ist wie die Vektorkomponentenanzahl der Eingangs- und Ausgangsvektoren.

Die Vektorkomponentenanzahl der Zwischenvektoren beträgt vorzugsweise maximal 25 % der Vektorkomponentenanzahl der Eingangs- und Ausgangsvektoren.

Von Vorteil ist es, wenn die Eingangsvektoren pro Weichenumlauf jeweils zumindest zehn Strom- und/oder Leistungsabtastwerte umfassen, die den zeitlichen Verlauf des Antriebsstroms und/oder der Leistungsaufnahme während des jeweiligen Weichenumlaufs beschreiben.

Die Eingangsvektoren umfassen pro Weichenumlauf vorzugsweise jeweils einen die Umgebungstemperatur während des Weichenumlaufs beschreibenden Temperaturmesswert.

Die Eingangsvektoren umfassen pro Weichenumlauf vorzugsweise jeweils einen Messwert, der Schneefall im Bereich der Eisenbahnweiche quantitativ beschreibt.

Die Eingangsvektoren umfassen pro Weichenumlauf vorzugsweise jeweils einen Messwert, der Eis auf den Schienen im Bereich der Eisenbahnweiche beschreibt.

Die Eingangsvektoren umfassen pro Weichenumlauf vorzugsweise jeweils einen Messwert, der Regen im Bereich der Eisenbahnweiche im Zeitraum vor oder während des Weichenumlaufs quantitativ beschreibt (z. B. in Form der Höhe einer Regensäule).

Die Eingangsvektoren umfassen pro Weichenumlauf vorzugsweise jeweils eine binäre Angabe, ob eine Weichenheizung der Eisenbahnweiche eingeschaltet ist.

Die Eingangsvektoren umfassen pro Weichenumlauf vorzugsweise jeweils einen Messwert, der Sandflug im Bereich der Eisenbahnweiche im Zeitraum vor oder während des Weichenumlaufs quantitativ beschreibt (z. B. in Form der Höhe einer Sandsäule).

Die Eingangsvektoren umfassen pro Weichenumlauf vorzugsweise jeweils eine binäre Angabe, ob ein Objekt den Weichenumlauf beeinträchtigt hat.

Die Komprimier-/Dekomprimiereinrichtung ist vorzugsweise ein Autoencoder oder ein trainiertes neuronales Netz mit Autoencoderfunktion oder Autoencoder-ähnlicher Funktion.

Des Weiteren wird ein Computerprogrammprodukt mit Programmbefehlen zur Durchführung des genannten erfindungsgemäßen Verfahrens und/oder dessen Ausführungsbeispielen beansprucht, wobei mittels des Computerprogrammprodukts jeweils das erfindungsgemäße Verfahren und/oder dessen Ausführungsbeispiele durchführbar sind.

Die Erfindung bezieht sich darüber hinaus auf eine Überwachungseinrichtung für eine Eisenbahnweiche. Erfindungsgemäß ist bezüglich einer solchen Überwachungseinrichtung vorgesehen, dass diese umfasst: eine Eingangseinheit, die für vorgegebene Beobachtungszeiträume, in denen jeweils zumindest ein Weichenumlauf der Eisenbahnweiche stattgefunden hat, Eingangsmesswerte erfasst und mit den Eingangsmesswerten für jeden Beobachtungszeitraum jeweils einen Eingangsvektor bildet, eine der Eingangseinheit nachgeordnete Komprimier-/Dekomprimiereinrichtung, in die die Eingangsvektoren eingespeist werden und die an ihrem Ausgang für jeden Eingangsvektor jeweils einen Ausgangsvektor ausgibt, wobei die Komprimier-/Dekomprimiereinrichtung im Rahmen eines Trainingsverfahrens anhand von Trainingseingangsvektoren, die für eine oder mehrere Eisenbahnweichen ohne Wartungsbedarf erstellt worden sind, derart trainiert worden ist, dass die Abweichung zwischen den Trainingseingangsvektoren und mit diesen durch die Komprimier-/Dekomprimiereinrichtung gebildeten Trainingsausgangsvektoren minimal ist oder eine vorgegebene Abweichungsgrenze unterschreitet, und eine Auswerteinheit, die für jeden Ausgangsvektor die Abweichung zwischen dem Ausgangsvektor und dem ihm zugehörigen Eingangsvektor unter Bildung eines Abweichungswerts ermittelt und anhand der Abweichungswerte ein Wartungssignal erzeugt, das eine Wartungsempfehlung zur Wartung der Eisenbahnweiche beschreibt.

Bezüglich der Vorteile der erfindungsgemäßen Überwachungseinrichtung sowie vorteilhafter Ausgestaltungen der erfindungsgemäßen Überwachungseinrichtung sei auf die obigen Ausführungen im Zusammenhang mit dem erfindungsgemäßen Verfahren und dessen vorteilhafter Ausgestaltungen verwiesen.

Vorteilhaft ist es, wenn die Auswerteinheit eine Prognoseeinheit umfasst, die den zeitlichen Verlauf zumindest zweier Abweichungswerte einem Prognoseschritt unterzieht, mit dem prognostiziert wird, zu welchem Zeitpunkt die Abweichungswerte zukünftiger Beobachtungszeiträume einen vorgegebenen Grenzwert erreichen oder überschreiten werden und die Auswerteinheit als das Wartungssignal ein Signal erzeugt, das den prognostizierten Zeitpunkt oder einen mit diesem gebildeten Ersatzzeitpunkt oder Ersatzzeitraum angibt.

Die Erfindung bezieht sich darüber hinaus auf eine Trainingseinrichtung zum Trainieren einer Komprimier-/Dekomprimiereinrichtung für ein Verfahren wie oben beschrieben oder eine Überwachungseinrichtung wie oben beschrieben. Erfindungsgemäß ist bezüglich einer solchen Trainingseinrichtung vorgesehen, dass diese umfasst: eine Trainingseingangseinheit, die mit für vorgegebene Beobachtungszeiträume, in denen jeweils zumindest ein Weichenumlauf einer keinen Wartungsbedarf aufweisenden Eisenbahnweiche stattgefunden hat, erfassten Eingangsmesswerten für jeden Beobachtungszeitraum jeweils einen Eingangstrainingsvektor bildet und diesen in die Komprimier-/Dekomprimiereinrichtung einspeist, eine Trainingsausgangseinheit, die für jeden Trainingsausgangsvektor der Komprimier-/Dekomprimiereinrichtung die Abweichung zwischen dem Trainingsausgangsvektor und dem ihm zugehörigen Trainingseingangsvektor unter Bildung eines Abweichungswerts ermittelt, und eine Anlerneinrichtung, die anhand der Abweichungswerte die Komprimier-/Dekomprimiereinrichtung trainiert, bis die Abweichung zwischen den Trainingseingangsvektoren und den Trainingsausgangsvektoren minimal ist oder eine vorgegebene Abweichungsgrenze unterschreitet.

Die Erfindung wird nachfolgend anhand von Ausführungsbeispielen näher erläutert; dabei zeigen beispielhaft:

Figur 1    eine Anordnung mit einer Eisenbahnweiche und einem Ausführungsbeispiel für eine erfindungsgemäße Überwachungseinrichtung, anhand derer beispielhaft erfindungsgemäße Verfahren zum Erzeugen eines Wartungssignals, das eine Wartungsempfehlung zur Wartung der Eisenbahnweiche beschreibt, erläutert werden,

Figur 2    ein Ausführungsbeispiel für die Überwachungseinrichtung gemäß Figur 1 näher im Detail,

Figur 3    ein Ausführungsbeispiel für eine Komprimier-/Dekomprimiereinrichtung, die für die Überwachungseinrichtung gemäß Figur 2 geeignet ist, näher im Detail,

Figur 4    ein Ausführungsbeispiel für die Durchführung einer Extrapolation zwecks Ermittlung einer Wartungsempfehlung,

Figur 5    ein Ausführungsbeispiel für aufeinanderfolgende Beobachtungszeiträume,

Figur 6    ein Ausführungsbeispiel für sich überschneidende Beobachtungszeiträume,

Figur 7    ein Ausführungsbeispiel für eine Trainingseinrichtung, die zum Trainieren der Überwachungseinrichtung gemäß Figur 2 geeignet ist,

Figur 8    ein Ausführungsbeispiel für eine computerimplementierte Ausführungsform der Überwachungseinrichtung gemäß Figur 2, und

Figur 9    ein Ausführungsbeispiel für ein Computerprogrammprodukt für die Überwachungseinrichtung gemäß Figur 8.

In den Figuren werden der Übersicht halber für identische oder vergleichbare Komponenten stets dieselben Bezugzeichen verwendet.

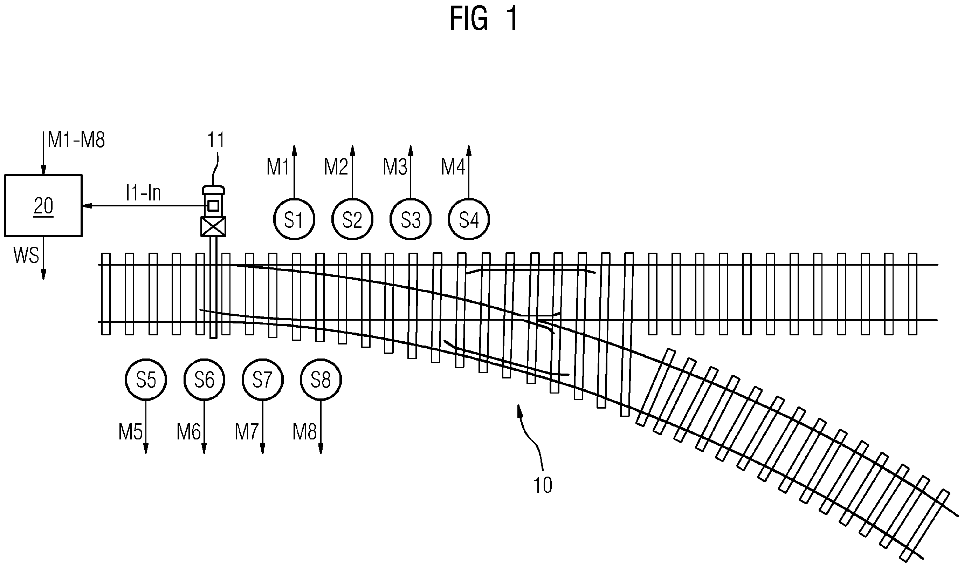

Die Figur 1 zeigt in einer schematischen Draufsicht ein Ausführungsbeispiel für eine Eisenbahnweiche 10, die mit einem Weichenantrieb 11 ausgestattet ist. Die Funktion der Eisenbahnweiche 10 wird von einer Überwachungseinrichtung 20 überwacht, die mit dem Weichenantrieb 11 sowie mit einer Vielzahl an Sensoren, die vorzugsweise im Bereich der Eisenbahnweiche 10 angeordnet sind, verbunden ist. Die Überwachungseinrichtung 20 kann lokal im Bereich der Eisenbahnweiche 10 oder entfernt in einem Stellwerk oder einer Leitzentrale angeordnet sein; auch kann die Überwachungseinrichtung 20 als in einem Cloudrechner installierte Software ausgeführt sein.

Bei dem Ausführungsbeispiel gemäß Figur 1 steht die Überwachungseinrichtung 20 mit einer Vielzahl m mit m=8 Sensoren in Verbindung, die in der Figur 1 mit den Bezugzeichen S1 bis S8 gekennzeichnet sind.

Der Sensor S1 kann beispielsweise ein Temperatursensor sein, der die Umgebungstemperatur im Bereich der Eisenbahnweiche 10 misst und als Eingangsmesswert M1 einen Temperaturmesswert an die Überwachungseinrichtung 20 übermittelt.

Der Sensor S2 kann beispielsweise ein Sensor sein, der Schneefall im Bereich der Eisenbahnweiche 10 erfasst und als Eingangsmesswert M2 für die Überwachungseinrichtung 20 einen Messwert, der den Schneefall im Bereich der Eisenbahnweiche 10 quantitativ beschreibt, ausgibt.

Der Sensor S3 kann beispielsweise ein Sensor sein, der Eis im Bereich der Eisenbahnweiche 10 erfasst und als Eingangsmesswert M3 für die Überwachungseinrichtung 20 einen Messwert ausgibt, der das Eis im Bereich der Eisenbahnweiche 10 quantitativ beschreibt.

Der Sensor S4 kann beispielsweise ein Sensor sein, der Regen im Bereich der Eisenbahnweiche 10 erfasst und als Eingangsmesswert M4 für die Überwachungseinrichtung 20 einen Messwert ausgibt, der den Regen im Bereich der Eisenbahnweiche 10 im Zeitraum vor oder während des Weichenumlaufs quantitativ (z. B. in Form der Säulenhöhe einer Regensäule) beschreibt.

Der Sensor S5 kann beispielsweise ein Sensor sein, der erfasst, ob eine Weichenheizung eingeschaltet ist, und als Eingangsmesswert M5 für die Überwachungseinrichtung 20 eine binäre Angabe, die angibt, ob die Weichenheizung eingeschaltet ist, ausgibt.

Der Sensor S6 kann beispielsweise ein Sensor sein, der Sandflug im Bereich der Eisenbahnweiche 10 erfasst und als Eingangsmesswert M6 für die Überwachungseinrichtung 20 einen Messwert ausgibt, der Sandflug im Bereich der Eisenbahnweiche 10 im Zeitraum vor oder während des Weichenumlaufs quantitativ (z. B. in Form einer Säulenhöhe einer Sandsäule) beschreibt.

Der Sensor S7 kann beispielsweise ein Objektsensor sein, der erfasst, ob ein Objekt den Weichenumlauf beeinträchtigt, und als Eingangsmesswert M7 für die Überwachungseinrichtung 20 eine binäre Angabe ausgibt, die angibt, ob ein Objekt den Weichenumlauf beeinträchtigt hat.

Der Sensor S8 kann beispielsweise zur Redundanz ein weiterer Temperatursensor sein, der die Umgebungstemperatur im Bereich der Eisenbahnweiche 10 misst und als Eingangsmesswert M8 für die Überwachungseinrichtung 20 einen weiteren Temperaturmesswert übermittelt.

Von dem Weichenantrieb 11 erhält die Überwachungseinrichtung 20 als Eingangsmesswerte außerdem Strom- und/oder Leistungsabtastwerte, die den zeitlichen Verlauf des Antriebsstromes und/oder der Leistungsaufnahme während eines jeweiligen Weichenumlaufs beschreiben.

In der Figur 1 wird beispielhaft davon ausgegangen, dass die Überwachungseinrichtung 20 Stromabtastwerte pro Weichenumlauf erhält, die mit den Bezugszeichen I1 bis In gekennzeichnet sind. Die Anzahl n kann beispielsweise 20 betragen.

Die Überwachungseinrichtung 20 wertet die eingangsseitig vorliegenden Eingangsmesswerte I1 bis In und M1 bis M8 aus und erzeugt ausgangsseitig ein Wartungssignal WS, das im Falle eines erkannten hohen Wartungsbedarfs eine sofortige Wartung empfiehlt; anderenfalls, wenn also kein sofortiger Wartungseingriff notwendig ist, wird vorzugsweise ein Wartungssignal WS mit einer Wartungsempfehlung für eine zukünftige Wartung erzeugt. Die Wartungsempfehlung kann beispielsweise einen prognostizierten Zeitpunkt angeben, bis zu dem eine Wartung, insbesondere eine Schmierung von Komponenten der Eisenbahnweiche 10, spätestens erfolgen sollte.

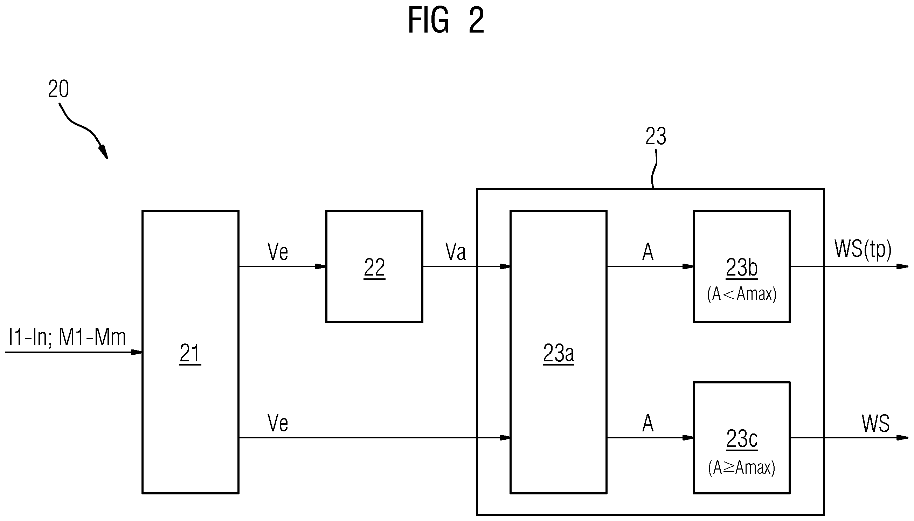

Die Figur 2 zeigt ein Ausführungsbeispiel für eine vorteilhafte Ausgestaltung der Überwachungseinrichtung 20 gemäß Figur 1 näher im Detail.

Die Überwachungseinrichtung 20 gemäß Figur 2 umfasst eine Eingangseinheit 21, die für ein oder mehrere aufeinander folgende Weichenumläufe jeweils mit den eingangsseitig vorliegenden Eingangsmesswerten I1 bis In und M1 bis Mm, einen Eingangsvektor Ve bildet. Bezieht sich der Eingangsvektor Ve dabei beispielsweise jeweils auf eine vorgegebene Anzahl Q an Weichenumläufen, so umfasst der Eingangsvektor Ve bei einer Anzahl n an Strom- und/oder Leistungsabtastwerten und einer Anzahl m an weiteren Sensormesswerten von m Sensoren eine Vektorkomponentenanzahl Z gemäß

$$Z = Q * n * m$$

Ausgangsseitig leitet die Eingangseinheit 21 ihren Eingangsvektor Ve zu einer Komprimier-/Dekomprimiereinrichtung, die als Autoencoder 22 ausgestaltet sein kann, sowie zu einem Differenzbildner 23a einer nachgeordneten Auswerteinheit 23. Der Autoencoder 22 bildet mit dem Eingangsvektor Ve einen Ausgangsvektor Va, der ebenfalls in den bereits erwähnten Differenzbildner 23a eingespeist wird.

Der Differenzbildner 23a errechnet einen Abweichungswert A, der die Abweichung zwischen dem Ausgangsvektor Va und dem Eingangsvektor Ve quantifiziert. Die Differenzbildung bzw. die Bildung des Abweichungswerts A kann beispielsweise durch Bildung des vektoriellen Skalarprodukts zwischen dem Eingangsvektor Ve und dem Ausgangsvektor Va errechnet werden, beispielsweise gemäß:

$$A = \sum_{i=1}^{Z} x(i) * y(i)$$

wobei x(i) die Vektorkomponenten des Eingangsvektors Ve und y(i) die Vektorkomponenten des Ausgangsvektors Va bezeichnen.

Der Abweichungswert A gelangt zu einer nachgeordneten Prognoseeinheit 23b und zu einer Auslöseeinheit 23c der Auswerteinheit 23.

Stellt die Auslöseeinheit 23c fest, dass der aktuelle Abweichungswert A einen vorgegebenen Grenzwert Amax, den man auch als Abweichungsmaximalwert bezeichnen kann, erreicht oder überschreitet, so erzeugt sie ausgangsseitig ein Wartungssignal WS, das eine sofortige Wartung der Eisenbahnweiche 10 empfiehlt.

Unterschreitet der Abweichungswert A den Abweichungsmaximalwert bzw. den Grenzwert Amax, so wertet die Prognoseeinheit 23b den aktuellen Abweichungswert A im Rahmen eines Prognoseschritts aus.

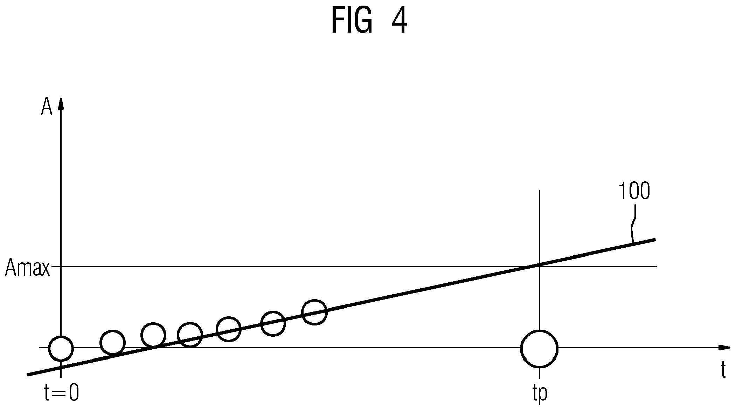

Bei dem Prognoseschritt wird der aktuelle Abweichungswert A und zeitlich frühere Abweichungswerte hinsichtlich eines Abweichungsanstiegs ausgewertet und es wird geschätzt, zu welchem Zeitpunkt die Abweichungswerte zukünftiger Beobachtungszeiträume den vorgegebenen Grenzwert Amax erreichen oder überschreiten werden. Dies wird nachfolgend im Zusammenhang mit der Figur 4 weiter unten erläutert.

Die Prognoseeinheit 23b erzeugt ausgangsseitig als Wartungssignal WS eine Wartungsempfehlung in Form eines prognostizierten Zeitpunktes tp, der anzeigt, wann zukünftige Abweichungswerte den vorgegebenen Grenzwert Amax überschreiten werden. Der prognostizierte Zeitpunkt tp gibt also an, wann spätestens eine Wartung, insbesondere eine Schmierung, der Eisenbahnweiche 10 erfolgen sollte.

Alternativ oder zusätzlich kann die Prognoseeinheit 23b im Rahmen des Wartungssignals WS auch einen Wunschwartungszeitpunkt oder einen Wunschwartungszeitraum als Empfehlung ausgeben; ein solcher Wunschwartungszeitpunkt oder Wunschwartungszeitraum liegt vorzugsweise vor dem prognostizierten Zeitpunkt tp, um eine gewisse Sicherheitsmarge zu gewährleisten.

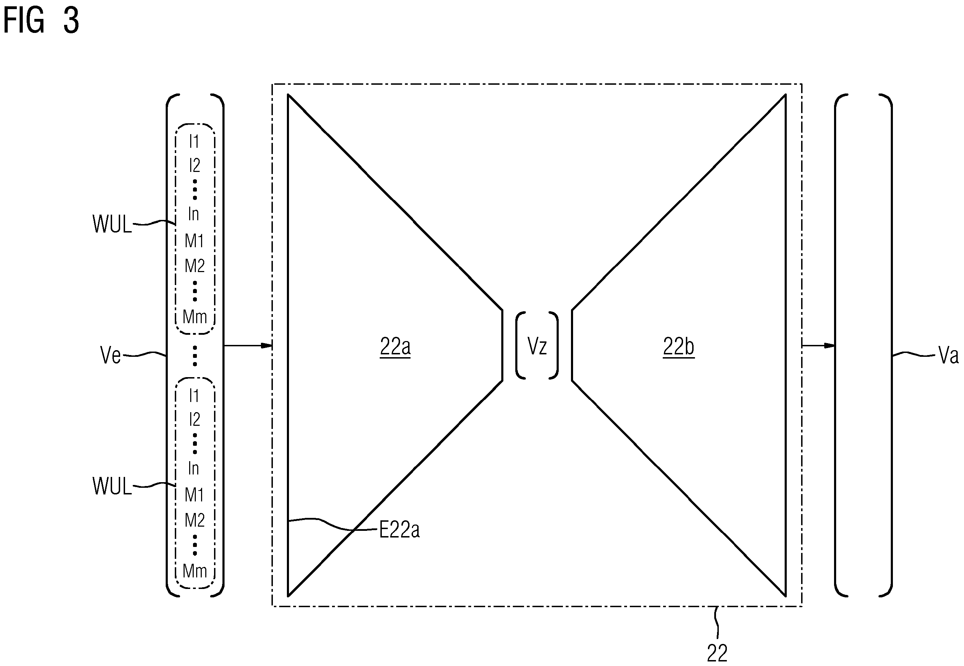

Die Figur 3 zeigt ein Ausführungsbeispiel für eine geeignete Komprimier-/Dekomprimiereinrichtung bzw. den Autoencoder 22 der Überwachungseinrichtung 20 gemäß Figur 2 näher im Detail.

Der Autoencoder 22 umfasst eine Eingabeschicht 22a, bei der es sich beispielsweise um ein neuronales Netz handeln kann. Die Eingabeschicht 22a ist auf einer Eingabeseite E22a zum Empfang des Eingangsvektors Ve der Eingangseinheit 21 ausgebildet.

Bei dem Ausführungsbeispiel gemäß Figur 3 umfasst der Eingangsvektor Ve für einen vorgegebenen Umschaltzeitraum, in dem eine Vielzahl Q an Weichenumläufen WUL stattgefunden hat, die entsprechenden Eingangsmesswerte I1-In und M1-Mm. Bei der Darstellung gemäß Figur 3 sind die Eingangsmesswerte lediglich für zwei Weichenumläufe, nämlich den ersten und letzten Weichenumlauf, beispielhaft aufgelistet.

Die Eingabeschicht 22a erzeugt auf der Basis des Eingangsvektors Ve einen Zwischenvektor Vz, dessen Vektorkomponentenzahl Zw deutlich kleiner als die Vektorkomponentenzahl Z des Eingangsvektors Ve ist. Die Eingabeschicht 22a arbeitet sozusagen als Komprimiereinrichtung, die den Eingangsvektor Ve komprimiert und einen komprimierten Zwischenvektor Vz bildet. Vorzugsweise gilt:

$$Zw \leq Z$$

Der Eingabeschicht 22a ist eine Ausgabeschicht 22b nachgeordnet, in die eingangsseitig der Zwischenvektor Vz eingespeist wird. Die Funktion der Ausgabeschicht 22b besteht darin, den Zwischenvektor Vz zu dekomprimieren und einen Ausgangsvektor Va zu erzeugen, dessen Vektorkomponentenzahl der Vektorkomponentenzahl Z des Eingangsvektors Ve entspricht.

Da die Vektorkomponentenzahl Zw des Zwischenvektors Vz kleiner als die Vektorkomponentenzahl Z des Eingangsvektors Ve und des Ausgangsvektors Va ist, wird die Kompression und Dekompression nicht verlustfrei sein; es kommt also systembedingt absichtlich zu einer gewissen Abweichung zwischen dem Ausgangsvektor Va und dem Eingangsvektor Ve.

Die Abweichung zwischen dem Ausgangsvektor Va und dem Eingangsvektor Ve ist dabei umso größer, je mehr die jeweils eingespeisten Eingangsvektoren Ve von Trainingsvektoren abweichen, mit denen der Autoencoder 22 trainiert worden ist.

Bei dem Ausführungsbeispiel gemäß Figur 3 sind die Eingabeschicht 22a und die Ausgabeschicht 22b im Rahmen eines Trainingsverfahrens auf der Basis von Trainingseingangsvektoren, die für die Eisenbahnweiche 10 ohne Wartungsbedarf erstellt worden sind, derart trainiert worden, dass die Abweichung zwischen den Trainingseingangsvektoren und den mit diesen gebildeten Trainingsausgangsvektoren für die Eisenbahnweiche 10 im Falle, dass kein Wartungsbedarf vorhanden ist, minimal ist.

Wird nun im Rahmen des weiteren Betriebs der Eisenbahnweiche 10 in den Autoencoder gemäß Figur 3 ein Eingangsvektor Ve eingespeist, der sich auf die Eisenbahnweiche 10 ohne Wartungsbedarf bezieht, so wird der Ausgangsvektor Va sehr ähnlich zum Eingangsvektor Ve sein und der Abweichungswert A zwischen dem Ausgangsvektor Va und dem Eingangsvektor Ve minimal sein.

Wird hingegen in den Autoencoder 22 ein Eingangsvektor Ve eingespeist, der sich auf die Eisenbahnweiche 10 gemäß Figur 1 mit Wartungsbedarf bezieht, so wird aufgrund der Fehlanpassung des Autoencoders 22 eine gewisse Abweichung zwischen dem Ausgangsvektor Va und dem Eingangsvektor Ve feststellbar sein, wobei die Größe des Abstandswerts A zwischen den beiden Vektoren umso größer sein wird, je höher der Wartungsbedarf der Eisenbahnweiche 10 ist.

Die Figur 4 zeigt den Verlauf von Abstandswerten A über der Zeit t während des Betriebs der Eisenbahnweiche 10. Es lässt sich erkennen, dass nach einer erfolgten Wartung bzw. einer erfolgten Schmierung der Eisenbahnweiche 10 zum Zeitpunkt t = 0 die Abstandswerte A relativ klein sein werden und erst mit der Zeit t langsam ansteigen.

Werden nun die Abstandswerte A über der Zeit t beobachtet, so lässt sich eine Extrapolation der Abstandswerte A über der Zeit t durchführen, wie in der Figur 4 beispielhaft durch eine Linie 100 angedeutet ist, und prognostizieren, wie die weitere Entwicklung voraussichtlich aussehen wird. Eine solche Extrapolation muss dabei nicht linear sein, wie die Figur 4 zeigt, sie kann auch auf einem nichtlinearen Modell basieren, beispielweise auf einer Polynomfunktion. Auch kommen noch komplexere Varianten in Betracht wie beispielsweise ein "predictive-modelling-using-linear-regression"-Verfahren, wie es auf der Webseite https://medium.com/swlh/predictive-modelling-using-linear-regression-e0e399dc4745 beschrieben ist.

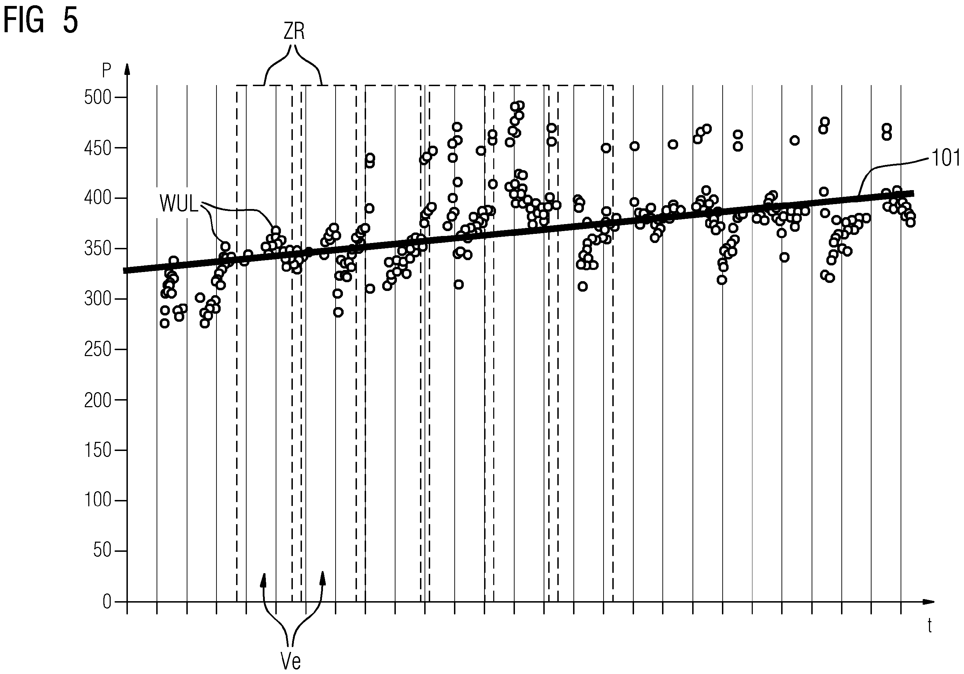

Die Figur 5 zeigt beispielhaft in Form von Punkten durchschnittliche Leistungsaufnahmewerte P pro Weichenumlauf für Weichenumläufe der Eisenbahnweiche 10 gemäß Figur 1, die zu unterschiedlichen Zeitpunkten erfasst worden sind. Es lässt sich erkennen, dass die eingezeichneten Leistungsaufnahmewerte P stark schwanken, was unter anderem auf Temperatureffekte sowie Wettereffekte zurückzuführen sein kann. Auch lässt sich ein mittlerer Anstieg über der Zeit t erkennen, wie durch ein Band 101 in der Figur 5 angedeutet ist.

In der Figur 5 sind darüber hinaus Beobachtungszeiträume ZR angedeutet, in denen jeweils eine Vielzahl Q an durch die Punkte schematisch dargestellten Weichenumläufen WUL stattgefunden hat. Für jeden Beobachtungszeitraum ZR bzw. für alle Weichenumläufe WUL im jeweiligen Beobachtungszeitraum ZR werden jeweils die erfassten Eingangsmesswerte einem Eingangsvektor Ve zugeordnet, der nachfolgend, wie oben im Zusammenhang mit den Figuren 2 und 3 beschrieben wurde, verarbeitet wird.

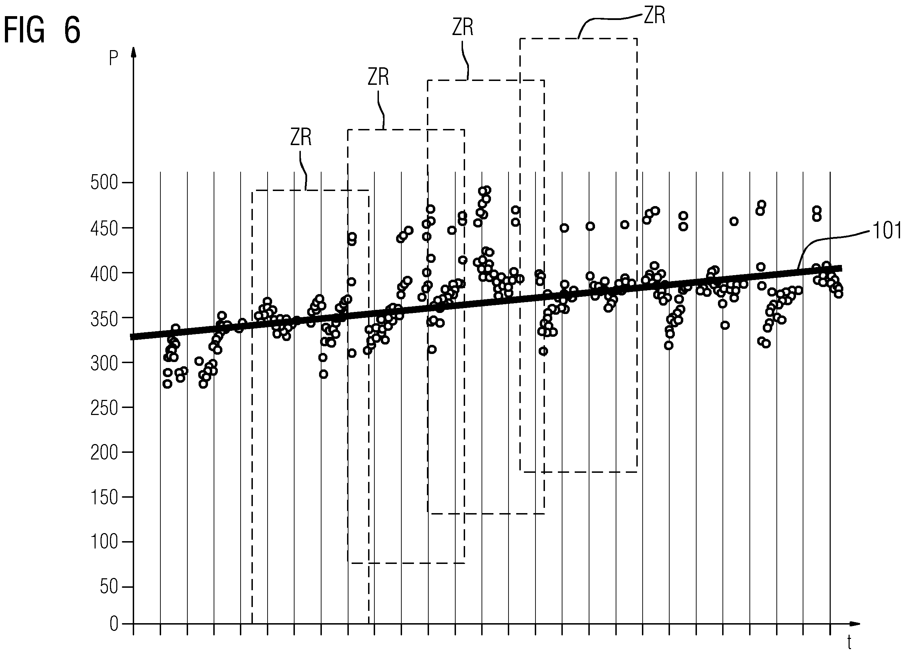

Die Beobachtungszeiträume ZR, für die jeweils ein Eingangsvektor Ve gebildet wird, können zeitlich - unmittelbar aneinander angrenzend oder mit zeitlichem Abstand zueinander - aufeinander folgen, wie in der Figur 5 dargestellt ist. Alternativ ist es möglich, dass sich die Beobachtungszeiträume ZR überlappen und Weichenumläufe im zeitlichen Verlauf mehrfach berücksichtigt werden, weil sie mehr als einem Beobachtungszeitraum ZR zugeordnet werden. Eine solche Ausführungsvariante ist beispielhaft in der Figur 6 gezeigt.

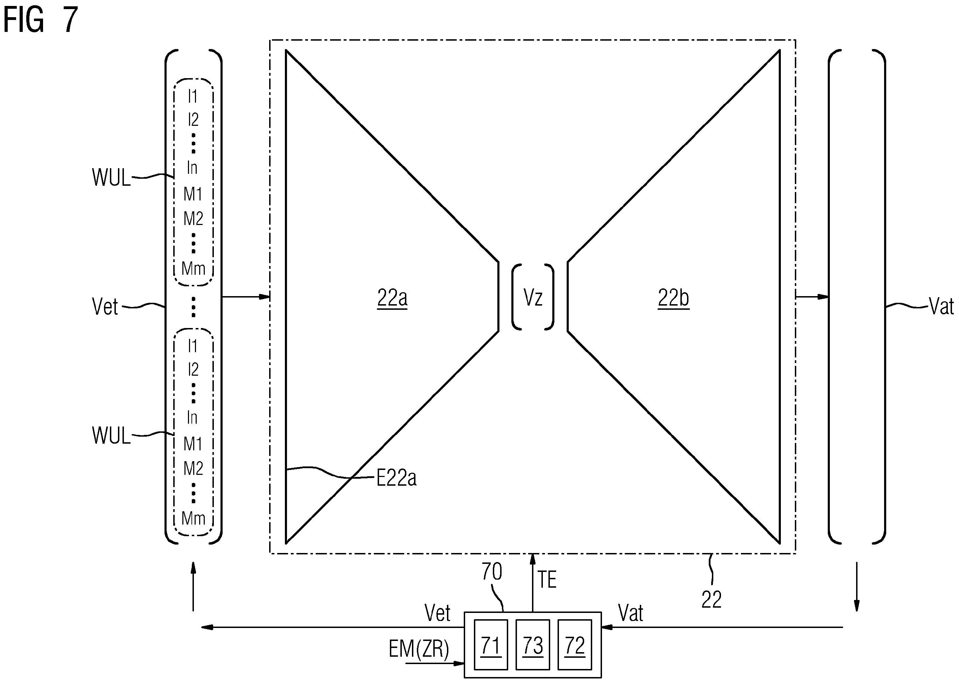

Die Figur 7 zeigt ein Ausführungsbeispiel für eine Trainingseinrichtung 70, die zum Trainieren der Komprimier-/Dekomprimiereinrichtung 22 gemäß Figur 2 geeignet ist.

Die Trainingseinrichtung 70 umfasst eine Trainingseingangseinheit 71, die mit für vorgegebene Beobachtungszeiträume ZR, in denen jeweils zumindest ein Weichenumlauf einer keinen Wartungsbedarf aufweisenden Eisenbahnweiche stattgefunden hat, erfassten Eingangsmesswerten EM für jeden Beobachtungszeitraum ZR jeweils einen Eingangstrainingsvektor Vet bildet und diesen in die Komprimier-/Dekomprimiereinrichtung 22 einspeist.

Die Trainingseinrichtung 70 umfasst außerdem eine Trainingsausgangseinheit 72, die für jeden von der Komprimier-/Dekomprimiereinrichtung 22 ausgegebenen Trainingsausgangsvektor Vat die Abweichung zwischen dem Trainingsausgangsvektor Vat und dem ihm zugehörigen Eingangstrainingsvektor Vet unter Bildung eines Abweichungswerts ermittelt.

Die Trainingseinrichtung 70 umfasst außerdem eine Anlerneinrichtung 73, die anhand der Abweichungswerte die Komprimier-/Dekomprimiereinrichtung 22 trainiert. Im Rahmen des Trainings werden die Eingabeschicht 22a und die Ausgabeschicht 22b durch im Bereich der künstlichen Intelligenz bekannte Trainingsverfahren bzw. Trainingseingriffe TE so lange verändert, bis die Abweichung zwischen den Trainingsausgangsvektoren Vat und den Trainingseingangsvektoren Vet minimal ist bzw. eine vorgegebene Abweichungsgrenze unterschreitet. Geeignete Trainingsverfahren sind beispielsweise Gradiententrainingsverfahren und Verfahren, wie sie in der Druckschrift "Reducing the Dimensionality of Data with Neural Networks" (G. E. Hinton und R. R. Salakhutdinov; 28 Juli 2006, VOL 313; SCIENCE www.sciencemag.org; Seiten 504-507) bzw. https://www.cs.cmu. edu/~tom/10701_sp11/slides/DeepNets_scienc e2006. pdf sowie beispielsweise auf den folgenden Webseiten beschrieben sind: https://towardsdatascience.com/applied-deep-learning-part-3-autoencoders-1c083af4d798; https://de.wikipedia.org/wiki/Autoencoder.

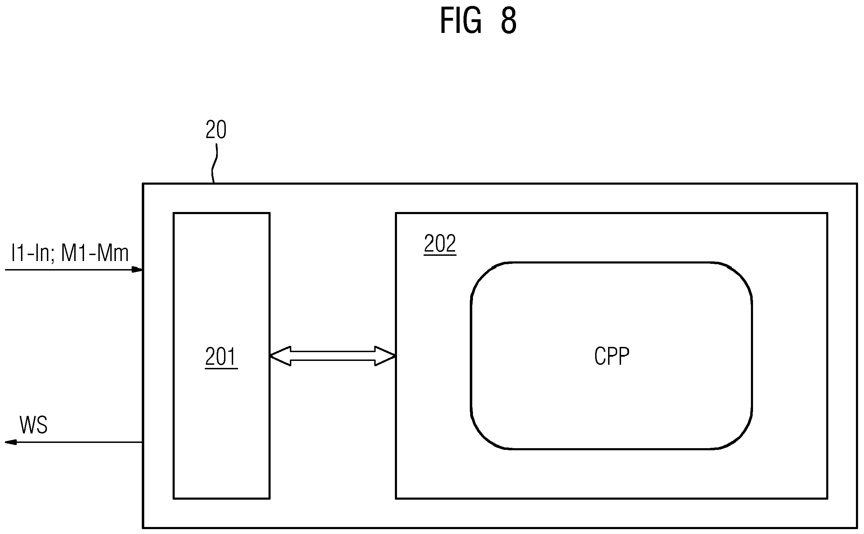

Die Figur 8 zeigt ein Ausführungsbeispiel für eine computerimplementierte Ausführungsform der Überwachungseinrichtung 20 gemäß Figur 2.

Die Überwachungseinrichtung 20 gemäß Figur 8 umfasst eine Recheneinrichtung 201 und einen Speicher 202. In dem Speicher 202 ist ein Computerprogrammprodukt CPP abgespeichert, das bei Ausführung durch die Recheneinrichtung 201 die oben im Zusammenhang mit den Figuren 1 bis 7 beschriebene Überwachungsfunktion zwecks Ausgabe von Wartungssignalen WS ausübt.

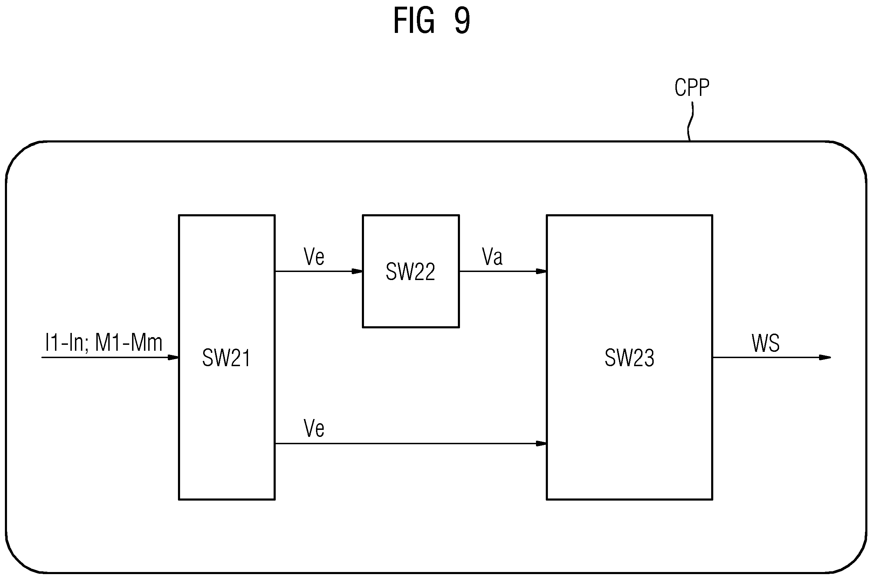

Die Figur 9 zeigt ein Ausführungsbeispiel für das Computerprogrammprodukt CPP gemäß Figur 8 näher im Detail. Es lässt sich erkennen, dass das Computerprogrammprodukt CPP umfasst: ein Softwaremodul SW21, das bei Ausführung durch die Recheneinrichtung 201 die Eingangseinheit 21 gemäß Figur 2 bildet, ein Softwaremodul SW22, das bei Ausführung durch die Recheneinrichtung 201 die Komprimier-/Dekomprimiereinrichtung 22 gemäß Figur 2 bildet, und ein Softwaremodul SW23, das bei Ausführung durch die Recheneinrichtung 201 die Auswerteinheit 23 gemäß Figur 2 bildet.

Die oben im Zusammenhang mit den Figuren 1 bis 9 beschriebenen Ausführungsbeispiele können einzelne oder mehrere der nachfolgend stichpunktartig aufgeführten Eigenschaften und/oder Vorteile aufweisen:

- Es können notwendige Schmierungen bzw. ein optimaler Zeitpunkt für eine prädiktive Schmierung aus der Analyse der historischen Daten abgeleitet und einem zuständigen Infrastrukturbetreiber automatisiert vorhergesagt werden.
- Für eine besonders hohe Effektivität ist ein regelmäßiger Betrieb der Weiche und das Vorliegen von historischen Daten mit zugehörigen Berichten über Funktionalität und

Schmieraktivitäten an der Weiche vorteilhaft.

- Basierend auf Erfahrungswerten aus dem Feld und den aufbereiteten Daten lassen sich initiale Zusammenhänge zwischen Funktionalität, Schmierung und notwendigen Leistungswerten während des Umstellvorgangs erkennen. Nach einer Wartung mit Schmierung wird im Mittel weniger Leistung für die Umstellung einer Weiche benötigt.
- Optimale Schmierintervalle lassen sich aus historischen Daten identifizieren, um Instandhaltungsaktivitäten zu minimieren unter gleichbleibender Qualität der Instandhaltung.
- Folgende Annahmen werden vorzugsweise getroffen:

  - Die Weichenfunktionalität ist nach einer Schmierung als einwandfrei klassifiziert.

- Die zugehörigen Schmierungszeitpunkte sind bekannt.
- Leistungswerte und Wetterdaten liegen vor.

- Es wird ein datengetriebener Ansatz verfolgt, um die relevanten Muster für die Vorhersage einer Schmieraktivität direkt aus den Daten lernen zu können.
- Leistungskennwerte und Wetterdaten werden über definierte Beobachtungszeiträume (z. B. 10, 20, 40 Umläufe oder auch zeitlich alle 1, 2 oder 5 Tage) in einen Merkmalsraum formatiert (Vektor mit Attributwerten), um Eingangsvektoren zu bilden. Diese Wertereihen dienen als Eingangsdaten bzw. Eingangsvektoren für die Komprimier-/Dekomprimiereinrichtung.
- Bei der Komprimier-/Dekomprimiereinrichtung handelt es sich vorzugsweise um ein neuronales Netz. Hierbei kommt vorzugsweise ein neuronales Netz mit einer Autoencoder-Architektur zum Einsatz, wie sie zum Beispiel in https://de.wikipedia.org/wiki/Autoencoder beschrieben sind.
- Während des Trainings der Komprimier-/Dekomprimiereinrichtung bzw. des neuronalen Netzes wird die Rekonstruktionsfähigkeit des Netzes optimiert, d. h. im Encoding werden die relevanten Merkmalsräume reduziert und während des Decodings wieder auf die originale Dimension gebracht. Dabei wird die Differenz zwischen Original-Merkmalsvektor und des rekonstruierten Vektors minimiert (Loss Function, L1 oder L2 Norm).
- Bei der Anwendung, also der Weichenbeobachtung im laufenden Betrieb werden die Eingangsvektoren durch die Komprimier-/Dekomprimiereinrichtung bzw. das neuronale Netz geschickt und die Rekonstruktion mit dem Eingangsvektor verglichen z. B. gemäß L1- oder L2-Norm (je nach Optimierungsfunktion). Die eindimensionale Distanz ergibt einen skalaren Wert über die Abweichung zum aktuellen Zustand für den entsprechenden Beobachtungszeitraum.
- Werden diese Werte für unterschiedliche, aufeinander folgende Sequenzen berechnet, ist eine Ableitung der Entwicklung über die Zeit möglich (z. B. über einfache Regressoren und Extrapolation). Über einen einfachen Schwellenwert kann der notwendige Schmierzeitpunkt ermittelt werden.
- Die vorgeschlagene Vorgehensweise ermöglicht eine Vorhersage zur notwendigen Schmierung. Die Schmierung erfolgt daher vorzugsweise nicht mehr regelmäßig präventiv oder reaktiv, sondern der Zyklus wird aus der Vorhersage abgeleitet. Die Weiche würde demnach nur noch dann geschmiert werden, wenn es zustandsbedingt notwendig ist. Schmierintervalle können dadurch verlängert und unnötige Wartungen vermieden werden. Dadurch ergeben sich Einsparungen bezüglich des Aufwands und Materials.
- Es wird vorzugsweise der aktuelle Status der Weiche mit der Komprimier-/Dekomprimiereinrichtung, insbesondere einem neuronalen Netz bzw. Autoencoder, bewertet. Diese liefert skalare Werte entlang der Zeitachse basierend auf einem Eingangsvektor. Diese Werte werden als Input herangezogen, um ein Standard-Modell zu fitten bzw. anzupassen. Das einfachste Modell ist eine Linie. Alternativ kommen komplexe Varianten in Betracht wie beispielsweise ein "predictive-modelling-using-linear-regression"-Verfahren, wie es auf der Webseite https://medium.com/swlh/predictive-modelling-using-linear-regression-e0e399dc4745 beschrieben ist.
- Die letztgenannten Modelle werden verwendet, um das Verhalten in die Zukunft zu extrapolieren. Und hier kommt vorzugsweise ein vorgegebener Grenzwert ins Spiel. Mit dem Grenzwert lässt sich quasi ein Arbeitspunkt einstellen, der festlegt, wie sensitiv das Modell vorhersagen soll. Wenn der vorgegebene Grenzwert sehr gering gewählt wird, wird wenig Abweichung zum Normalfall erlaubt und es werden die Intervalle zur Schmierung sehr engmaschig vorhergesagt werden; entsprechend grobmaschige Intervalle ergeben sich bei großen vorgegebenen Grenzwerten.
- Geeignete Komprimier-/Dekomprimiereinrichtungen und Verfahren zu deren Training sind beispielsweise beschrieben in:

  - https://towardsdatascience.com/applied-deep-learning-part-3-autoencoders-1c083af4d798
  - https://de.wikipedia.org/wiki/Autoencoder
  - "Reducing the Dimensionality of Data with Neural Networks" (G. E. Hinton und R. R. Salakhutdinov; 28 Juli 2006, VOL 313; SCIENCE www.sciencemag.org; Seiten 504-507) bzw. https://www.cs.cmu.edu/~tom/10701_sp11/slides/DeepNets_science2006.pdf

Abschließend sei erwähnt, dass die Merkmale aller oben beschriebenen Ausführungsbeispiele untereinander in beliebiger Weise kombiniert werden können, um weitere andere Ausführungsbeispiele der Erfindung zu bilden.

Auch können alle Merkmale von Unteransprüchen jeweils für sich mit jedem der nebengeordneten Ansprüche kombiniert werden, und zwar jeweils für sich allein oder in beliebiger Kombination mit einem oder mehreren anderen Unteransprüchen, um weitere andere Ausführungsbeispiele zu erhalten.

Unabhängig vom grammatikalischen Geschlecht eines bestimmten Begriffes sind Personen mit männlicher, weiblicher oder anderer Geschlechtsidentität mit umfasst.

Bezugszeichenliste

| | |
|---|---|
| 10 | Eisenbahnweiche |
| 11 | Weichenantrieb |
| 20 | Überwachungseinrichtung |
| 21 | Eingangseinheit |
| 22 | Autoencoder / Komprimier-/Dekomprimiereinrichtung |
| 22a | Eingabeschicht |
| 22b | Ausgabeschicht |
| 23 | Auswerteinheit |
| 23a | Differenzbildner |
| 23b | Prognoseeinheit |
| 23c | Auslöseeinheit |
| 70 | Trainingseinrichtung |
| 71 | Trainingseingangseinheit |
| 72 | Trainingsausgangseinheit |
| 73 | Anlerneinrichtung |
| 100 | Linie |
| 101 | Band |
| 201 | Recheneinrichtung |
| 202 | Speicher |

| | |
|---|---|
| A | Abweichungswert |
| Amax | Grenzwert / Abweichungsmaximalwert |
| CPP | Computerprogrammprodukt |
| E22a | Eingabeseite |
| EM | Eingangsmesswerte |
| I1-In | Stromabtastwerte |
| M1-Mm | Eingangsmesswerte |
| P | Leistungsaufnahmewerte |
| S1-S8 | Sensoren |
| SW21 | Softwaremodul |
| SW22 | Softwaremodul |
| SW23 | Softwaremodul |
| t | Zeit |
| TE | Trainingseingriffe |
| tp | Zeitpunkt |
| Va | Ausgangsvektor |
| Vat | Trainingsausgangsvektor |
| Ve | Eingangsvektor |
| Vet | Eingangstrainingsvektor |
| Vz | Zwischenvektor |
| WS | Wartungssignal |
| WUL | Weichenumlauf |
| ZR | Beobachtungszeiträume |

**Patentansprüche**

1. Verfahren zum Erzeugen eines Wartungssignals (WS), das eine Wartungsempfehlung zur Wartung einer Eisenbahnweiche (10) beschreibt, **dadurch gekennzeichnet, dass**

- mit für zumindest einen Beobachtungszeitraum (ZR), in dem zumindest ein Weichenumlauf (WUL) der Eisenbahnweiche (10) stattgefunden hat, erfassten Eingangsmesswerten (I1-In, M1-Mm; EM) ein Eingangsvektor (Ve) gebildet wird,
- der Eingangsvektor (Ve) in eine Komprimier-/Dekomprimiereinrichtung (22) eingespeist wird,
- die Komprimier-/Dekomprimiereinrichtung (22) an ihrem Ausgang für den Eingangsvektor (Ve) einen Ausgangsvektor (Va) ausgibt, wobei die Komprimier-/Dekomprimiereinrichtung (22) im Rahmen eines Trainingsverfahrens anhand von Trainingseingangsvektoren (Vet), die für eine oder mehrere Eisenbahnweichen ohne Wartungsbedarf erstellt worden sind, derart trainiert worden ist, dass die Abweichung zwischen den Trainingseingangsvektoren (Vet) und mit diesen durch die Komprimier-/Dekomprimiereinrichtung (22) gebildeten Trainingsausgangsvektoren (Vat) minimal ist oder eine vorgegebene Abweichungsgrenze unterschreitet,
- für den Ausgangsvektor (Va) die Abweichung zwischen dem Ausgangsvektor (Va) und dem ihm zugehörigen Eingangsvektor (Ve) unter Bildung eines Abweichungswerts (A) ermittelt wird, und
- anhand des Abweichungswerts (A) das Wartungssignal (WS) erzeugt wird.

2. Verfahren nach Anspruch 1,
**dadurch gekennzeichnet, dass**

- für zumindest zwei Beobachtungszeiträume (ZR) der Eisenbahnweiche (10) jeweils Eingangsmesswerte (I1-In, M1-Mm; EM) erfasst werden und mit den Eingangsmesswerten (I1-In, M1-Mm; EM) für jeden der Beobachtungszeiträume (ZR) jeweils ein Eingangsvektor (Ve) für die Komprimier-/Dekomprimiereinrichtung (22) gebildet wird,
- jeder der Eingangsvektoren (Ve) in die Komprimier-/Dekomprimiereinrichtung (22) eingespeist wird,
- die Komprimier-/Dekomprimiereinrichtung (22) an ihrem Ausgang für jeden der Eingangsvektoren (Ve) jeweils einen Ausgangsvektor (Va) ausgibt,
- für jeden der zumindest zwei Ausgangsvektoren (Va) jeweils die Abweichung zwischen dem Ausgangsvektor (Va) und dem ihm zugehörigen Eingangsvektor (Ve) unter Bildung eines Abweichungswerts (A) ermittelt wird, und
- anhand der zumindest zwei Abweichungswerte (A) das Wartungssignal (WS) erzeugt wird.

3. Verfahren nach Anspruch 2,
**dadurch gekennzeichnet, dass**

- der zeitliche Verlauf der zumindest zwei Abweichungswerte (A) einem Prognoseschritt unterzogen wird, mit dem prognostiziert wird, zu welchem Zeitpunkt (tp) die Abweichungswerte (A) zukünftiger Beobachtungszeiträume (ZR) einen vorgegebenen Grenzwert (Amax) erreichen oder überschreiten werden, und
- das Wartungssignal (WS) den prognostizierten Zeitpunkt (tp) oder einen mit diesem gebildeten Ersatzzeitpunkt oder Ersatzzeitraum angibt.

4.  Verfahren nach Anspruch 2 oder 3,
    **dadurch gekennzeichnet, dass**

    - anhand des zeitlichen Verlaufs der Abweichungswerte (A) in der Vergangenheit ein aufgrund des mit der Zeit ansteigenden Wartungsbedarfs auftretender Abweichungsanstieg für die Zukunft geschätzt wird und anhand des Abweichungsanstiegs ermittelt wird, zu welchem Zeitpunkt (tp) die Abweichungswerte (A) zukünftiger Beobachtungszeiträume (ZR) den vorgegebenen Grenzwert (Amax) erreichen oder überschreiten werden.

5.  Verfahren nach einem der voranstehenden Ansprüche,
    **dadurch gekennzeichnet, dass** der oder die Beobachtungszeiträume (ZR) jeweils Eingangsmesswerte bezüglich eines einzigen Weichenumlaufs (WUL) umfassen.

6.  Verfahren nach einem der voranstehenden Ansprüche 1 bis 4,
    **dadurch gekennzeichnet, dass** der oder die Beobachtungszeiträume (ZR) jeweils Eingangsmesswerte bezüglich zweier oder mehr Weichenumläufe (WUL) umfassen.

7.  Verfahren nach Anspruch 6,
    **dadurch gekennzeichnet, dass** der oder die Beobachtungszeiträume (ZR) jeweils Eingangsmesswerte bezüglich zweier oder mehr zeitlich unmittelbar hintereinander liegender Weichenumläufe (WUL) umfassen.

8.  Verfahren nach einem der voranstehenden Ansprüche 1 bis 7,
    **dadurch gekennzeichnet, dass** die Beobachtungszeiträume (ZR) durch eine vorgegebene Anzahl an Umschaltvorgängen definiert sind, die für alle Beobachtungszeiträume (ZR) identisch ist.

9.  Verfahren nach einem der voranstehenden Ansprüche,
    **dadurch gekennzeichnet, dass**

    - die Komprimier-/Dekomprimiereinrichtung (22) eine Eingabeschicht (22a) zur Eingabe der Eingangsvektoren (Ve) und zur Bildung von Zwischenvektoren (Vz) aufweist,

- die Komprimier-/Dekomprimiereinrichtung (22) eine Ausgabeschicht (22b) zur Eingabe der Zwischenvektoren (Vz) und zur Bildung der Ausgangsvektoren (Va) aufweist und
- die Vektorkomponentenanzahl der Zwischenvektoren maximal halb so groß ist wie die Vektorkomponentenanzahl der Eingangs- und Ausgangsvektoren (Va).

10. Verfahren nach einem der voranstehenden Ansprüche,
    **dadurch gekennzeichnet, dass**

    - die Eingangsvektoren (Ve) pro Weichenumlauf (WUL) jeweils zumindest zehn Strom- und/oder Leistungsabtastwerte umfassen, die den zeitlichen Verlauf des Antriebsstroms und/oder der Leistungsaufnahme während des jeweiligen Weichenumlaufs (WUL) beschreiben, und
    - die Eingangsvektoren (Ve) pro Weichenumlauf (WUL) jeweils einen die Umgebungstemperatur während des Weichenumlaufs (WUL) beschreibenden Temperaturmesswert umfassen.

11. Verfahren nach einem der voranstehenden Ansprüche,
    **dadurch gekennzeichnet, dass** die Eingangsvektoren (Ve) pro Weichenumlauf (WUL) jeweils umfassen

    - einen Messwert, der Schneefall im Bereich der Eisenbahnweiche (10) quantitativ beschreibt, und/oder
    - einen Messwert, der Eis im Bereich der Eisenbahnweiche (10) beschreibt, und/oder
    - einen Messwert, der Regen im Bereich der Eisenbahnweiche (10) im Zeitraum vor oder während des Weichenumlaufs (WUL) quantitativ beschreibt, und/oder
    - eine binäre Angabe, ob eine Weichenheizung eingeschaltet ist,
    - einen Messwert, der Sandflug im Bereich der Eisenbahnweiche (10) im Zeitraum vor oder während des Weichenumlaufs (WUL) quantitativ beschreibt, und/oder
    - eine binäre Angabe, ob ein Objekt den Weichenumlauf (WUL) beeinträchtigt hat.

12. Verfahren nach einem der voranstehenden Ansprüche,
    **dadurch gekennzeichnet, dass** die Komprimier-/Dekomprimiereinrichtung (22) ein Autoencoder oder ein trainiertes neuronales Netz mit Autoendcoderfunktion oder Autoencoder-ähnlicher Funktion ist.

13. Überwachungseinrichtung (20) für eine Eisenbahnweiche (10),

**dadurch gekennzeichnet, dass** die Überwachungseinrichtung (20) umfasst

- eine Eingangseinheit (21), die für vorgegebene Beobachtungszeiträume (ZR), in denen jeweils zumindest ein Weichenumlauf (WUL) der Eisenbahnweiche (10) stattgefunden hat, Eingangsmesswerte (I1-In, M1-Mm; EM) erfasst und mit den Eingangsmesswerten (I1-In, M1-Mm; EM) für jeden Beobachtungszeitraum (ZR) jeweils einen Eingangsvektor (Ve) bildet,
- eine der Eingangseinheit (21)nachgeordneten Komprimier-/Dekomprimiereinrichtung (22), in die die Eingangsvektoren (Ve) eingespeist werden und die an ihrem Ausgang für jeden Eingangsvektor (Ve) jeweils einen Ausgangsvektor (Va) ausgibt, wobei die Komprimier-/Dekomprimiereinrichtung (22) im Rahmen eines Trainingsverfahrens anhand von Trainingseingangsvektoren (Vet), die für eine oder mehrere Eisenbahnweichen ohne Wartungsbedarf erstellt worden sind, derart trainiert worden ist, dass die Abweichung zwischen den Trainingseingangsvektoren (Vet) und mit diesen durch die Komprimier-/Dekomprimiereinrichtung (22) gebildeten Trainingsausgangsvektoren (Vat) minimal ist oder eine vorgegebene Abweichungsgrenze unterschreitet, und
- eine Auswerteinheit (23), die für jeden Ausgangsvektor (Va) die Abweichung zwischen dem Ausgangsvektor (Va) und dem ihm zugehörigen Eingangsvektor (Ve) unter Bildung eines Abweichungswerts (A) ermittelt und anhand der Abweichungswerte (A) ein Wartungssignal (WS) erzeugt, das eine Wartungsempfehlung zur Wartung der Eisenbahnweiche (10) beschreibt.

14. Überwachungseinrichtung nach Anspruch 13, **dadurch gekennzeichnet, dass**

- die Auswerteinheit (23) eine Prognoseeinheit (23b) umfasst, die den zeitlichen Verlauf zumindest zweier Abweichungswerte (A) einem Prognoseschritt unterzieht, mit dem prognostiziert wird, zu welchem Zeitpunkt (tp) die Abweichungswerte (A) zukünftiger Beobachtungszeiträume (ZR) einen vorgegebenen Grenzwert (Amax) erreichen oder überschreiten werden und
- die Auswerteinheit (23) als das Wartungssignal (WS) ein Signal erzeugt, das den prognostizierten Zeitpunkt (tp) oder einen mit diesem gebildeten Ersatzzeitpunkt oder Ersatzzeitraum angibt.

15. Trainingseinrichtung (70) zum Trainieren einer Komprimier-/Dekomprimiereinrichtung (22) für ein Verfahren nach einem der voranstehenden Ansprüche 1 bis 12 oder eine Überwachungseinrichtung (20) nach Anspruch 13 oder 14, **dadurch gekennzeichnet, dass** die Trainingseinrichtung (70) umfasst

- eine Trainingseingangseinheit (71), die mit für vorgegebene Beobachtungszeiträume (ZR), in denen jeweils zumindest ein Weichenumlauf (WUL) einer keinen Wartungsbedarf aufweisenden Eisenbahnweiche (10) stattgefunden hat, erfassten Eingangsmesswerten (I1-In, M1-Mm; EM) für jeden Beobachtungszeitraum (ZR) jeweils einen Trainingseingangsvektor bildet und diesen in die Komprimier-/Dekomprimiereinrichtung (22) einspeist,
- eine Trainingsausgangseinheit (72), die für jeden Trainingsausgangsvektor (Vat) der Komprimier-/Dekomprimiereinrichtung (22) die Abweichung zwischen dem Trainingsausgangsvektor (Vat) und dem ihm zugehörigen Trainingseingangsvektor (Vet) unter Bildung eines Abweichungswerts (A) ermittelt, und
- eine Anlerneinrichtung (73), die anhand der Abweichungswerte (A) die Komprimier-/Dekomprimiereinrichtung (22) trainiert, bis die Abweichung zwischen den Trainingseingangsvektoren (Vet) und den Trainingsausgangsvektoren (Vat) minimal ist oder eine vorgegebene Abweichungsgrenze unterschreitet.

FIG 1

FIG 2

## FIG 3

FIG 4

EP 4 431 363 A1

FIG 5

FIG 6

EP 4 431 363 A1

FIG 7

EP 4 431 363 A1

FIG 8

EP 4 431 363 A1

FIG 9

EP 4 431 363 A1

Europäisches Patentamt

European Patent Office

Office européen des brevets

# EUROPÄISCHER RECHERCHENBERICHT

**Nummer der Anmeldung**

**EP 23 16 1794**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2016 221479 A1 (SIEMENS AG [DE]) 3. Mai 2018 (2018-05-03) * Figur; Absätze [0011], [0016], [0037], [0039] und [0044] * ----- | 1-15 | INV. B61L5/06 B61L27/53 G06N3/02 |
| A | OLIVEIRA DAVID F N ET AL: "Evaluating Unsupervised Anomaly Detection Models to Detect Faults in Heavy Haul Railway Operations", 2019 18TH IEEE INTERNATIONAL CONFERENCE ON MACHINE LEARNING AND APPLICATIONS (ICMLA), IEEE, 16. Dezember 2019 (2019-12-16), Seiten 1016-1022, XP033719880, DOI: 10.1109/ICMLA.2019.00172 [gefunden am 2020-02-13] * Abschnitt III; Figur 3 * ----- | 1-15 | |
| A | WO 2022/225506 A1 (SIEMENS MOBILITY AUSTRIA GMBH [AT]; SIEMENS CORP [US]) 27. Oktober 2022 (2022-10-27) * Figur 3; Absätze [0018] - [0031] * ----- | 1-15 | |

**RECHERCHIERTE SACHGEBIETE (IPC)**

B61L
G06N

Der vorliegende Recherchenbericht wurde für alle Patentansprüche erstellt

| Recherchenort | Abschlußdatum der Recherche | Prüfer |
|---|---|---|
| München | 18. August 2023 | Plützer, Stefan |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

**EP 23 16 1794**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

**18-08-2023**

| Im Recherchenbericht angeführtes Patentdokument | Datum der Veröffentlichung | Mitglied(er) der Patentfamilie | Datum der Veröffentlichung |
|---|---|---|---|
| DE 102016221479 A1 | 03-05-2018 | AU 2017355153 A1 | 18-04-2019 |
| | | CN 109906182 A | 18-06-2019 |
| | | DE 102016221479 A1 | 03-05-2018 |
| | | EP 3507165 A1 | 10-07-2019 |
| | | ES 2907427 T3 | 25-04-2022 |
| | | RU 2725838 C1 | 06-07-2020 |
| | | WO 2018082857 A1 | 11-05-2018 |
| WO 2022225506 A1 | 27-10-2022 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **G. E. HINTON ; R. R. SALAKHUTDINOV.** Reducing the Dimensionality of Data with Neural Networks. *SCIENCE,* 28. Juli 2006, vol. 313, 504-507, www.sciencemag.org